(19) Europäisches Patentamt / European Patent Office / Office européen des brevets

(11) **EP 1 525 254 B1**

(12) **EUROPEAN PATENT SPECIFICATION**

(45) Date of publication and mention
of the grant of the patent:
**19.11.2008  Bulletin 2008/47**

(51) Int Cl.:
**C08K 3/04** (2006.01)

(21) Application number: **03765700.4**

(22) Date of filing: **17.07.2003**

(86) International application number:
**PCT/US2003/022432**

(87) International publication number:
**WO 2004/009689 (29.01.2004 Gazette 2004/05)**

(54) **CARBON BLACKS AND USES THEREOF**

RUSSE UND DEREN VERWENDUNG

NOIRS DE CARBONE ET UTILISATIONS ASSOCIEES

(84) Designated Contracting States:
**AT BE BG CH CY CZ DE DK EE ES FI FR GB GR HU IE IT LI LU MC NL PT RO SE SI SK TR**

(30) Priority: **19.07.2002  US 397287 P**

(43) Date of publication of application:
**27.04.2005  Bulletin 2005/17**

(73) Proprietor: **CABOT CORPORATION**
**Boston, Massachusetts  02210-2019 (US)**

(72) Inventor: **BHATT, Sandeep**
**Boxford, MA 01921 (US)**

(74) Representative: **Trueman, Lucy Petra**
**Barker Brettell LLP**
**138 Hagley Road**
**Edgbaston**
**Birmingham**
**B16 9PW (GB)**

(56) References cited:
**EP-A- 1 114 848**       **US-A- 5 877 250**
**US-A- 5 877 251**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## BACKGROUND OF THE INVENTION

The present invention relates to a class of new and useful carbon blacks which are suitable for various applications and particularly well suited for use in polymeric compositions, natural rubbers, synthetic rubbers, elastomers and/or blends or mixtures thereof. The present invention also relates to new and useful polymer compositions (polymers, natural rubbers, synthetic rubbers, elastomers and/or blends or mixtures thereof) which include the carbon blacks.

Carbon blacks are generally produced in a furnace-type reactor by pyrolyzing a hydrocarbon feedstock with hot combustion gases to produce combustion products containing particulate carbon black.

Carbon blacks may be utilized as pigments, fillers and/or reinforcing agents in polymer compositions.

Carbon blacks may be utilized to impart electrical conductivity and protection from ultraviolet (UV) degradation to polymer compositions. For example, carbon blacks are widely used to minimize the degradation of polymer compositions upon exposure to UV radiation. Such UV radiation occurs as a component of natural sunlight.

Carbon blacks are incorporated into the polymer composition through a variety of mixing techniques. For carbon blacks which have acceptable characteristics relating to UV protection, it is generally desirable to utilize those carbon blacks which will provide as low a viscosity as possible, and thus improve the processability of the carbon black-polymer composition mixture. Another desirable feature of carbon blacks used in such applications would be to maximize, to the extent practicable, the relative content of carbon black in the carbon black-polymer composition mixture. In order to minimize the tendency of a plastic composition to absorb moisture, it is desirable to utilize carbon blacks which possess as low of a compound moisture absorption (CMA) as possible. The CMA is indicative of the moisture absorption capability of the carbon black after it has been compounded into the polymer composition of interest.

In addition, carbon blacks useful in polymeric compositions are formed into pipes, such as pressure pipes, and require a variety of properties such as, but not limited to, longevity of service life of the pipe, prevention of UV degradation, low extractables, and the like. Finding appropriate carbon blacks that can be used in polymeric compositions for such uses as pipes has been difficult since obtaining a combination of appropriate properties has been difficult.

## SUMMARY OF THE PRESENT INVENTION

A feature of the present invention is to provide carbon blacks which have appropriate properties for use in polymeric compositions such as UV applications like pipe, film, membranes, jacketing, and the like.

Additional features and advantages of the present invention will be set forth in part in the description that follows, and in part will be apparent from the description, or may be learned by practice of the present invention. The objectives and other advantages of the present invention will be realized and attained by means of the elements and combinations particularly pointed out in the description and appended claims.

To achieve these and other advantages and in accordance with the purposes of the present invention, as embodied and broadly described herein, the present invention relates to carbon blacks having a iodine number of from about 50 to about 112 mg/g and a primary particle size of about 25 nm or less. The carbon blacks preferably also have an ash content of less than 1%, a total sulfur content of less than 2%, or a toluene extract level of less than 1%, a 325 mesh residue of about 200 ppm or less, or a combination of one or more of these additional properties.

Certain of the carbon blacks of the present invention may be further characterized as having a CDBP (dibutyl absorption value of the crushed carbon black) of less than or equal to 102 cubic centimeters DBP per 100 grams of carbon black (cc/100 g). The present invention further provides carbon blacks having an $I_2$ No. of 65-112 mg/g; a primary particle size of less than or equal to 20 nanometers (nm); and a CDBP (dibutyl absorption value of the crushed carbon black) of less than or equal to 102 cubic centimeters DBP per 100 grams of carbon black (cc/100 g). The present invention also provides carbon blacks having an $I_2$ No. of 50-85 mg/g; a primary particle size of less than or equal to 25 nm; and a CDBP of less than or equal to 96 cc/100 g. The carbon blacks are particularly well suited for use in the production of polymer compositions. Also described and claimed are polymer compositions incorporating the new carbon blacks.

The present invention further relates to polymeric compositions that contain one or more types of the carbon blacks of the present invention and at least one polymer.

The present invention further relates to articles formed from the polymeric compositions of the present invention, such as articles used in UV application, pipes, films, membranes, jacketing, and the like.

It is to be understood that both the foregoing general description and the following detailed description are exemplary and explanatory only and are intended to provide further explanation of the present invention, as claimed.

The accompanying drawings, which are incorporated in and constitute a part of this application, illustrate various aspects of the present invention and together with the description, serve to explain the principles of the present invention.

## BRIEF DESCRIPTION OF THE DRAWINGS

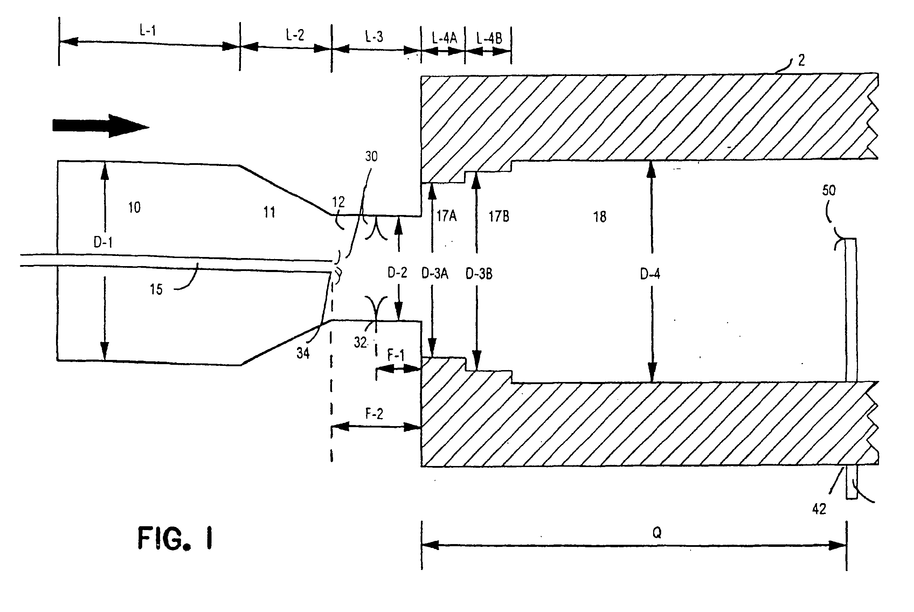

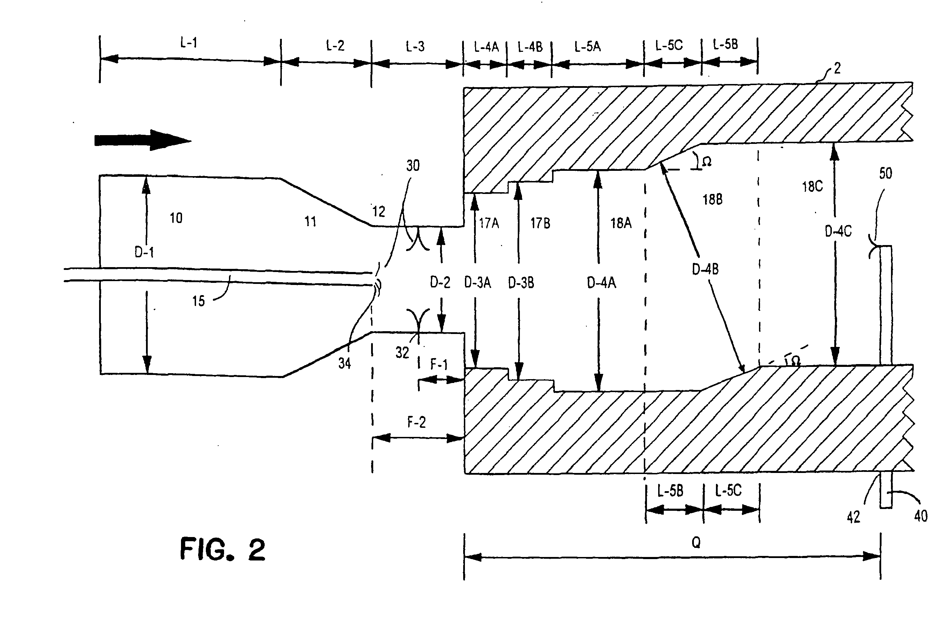

FIGS. 1 and 2 are cross-sectional views of a portion of furnace carbon black reactors which may be utilized to produce the carbon blacks of the present invention.

## DETAILED DESCRIPTION OF THE PRESENT INVENTION

The carbon blacks of the present invention are characterized by having an $I_2$ No. of from about 50 to about 112 mg/g, preferably from about 73 to about 104 mg/g, and more preferably from about 75 to about 99 mg/g, and a primary particle size of not greater than 25 nm, as measured in accordance with ASTM Test Procedure D3849-89.

Certain of the carbon blacks of the present invention may be further characterized as having a CDBP (dibutyl absorption value of the crushed carbon black) of less than or equal to 102 cubic centimeters DBP per 100 grams of carbon black (cc/100 g), measured in accordance with ASTM Test Procedure D3493-86.

Examples of carbon blacks include an $I_2$ No. of 65-95 mg/g and a primary particle size of less than or equal to 20 nm. The carbon blacks can have an h No. of 73-94 mg/g and/or a primary particle size of less than or equal to 19 nm.

The carbon blacks can have an $I_2$ No. of 85-93 mg/g and/or a primary particle size of less than or equal to 19 nm.

The present invention also provides carbon blacks having an $I_2$ No. of 100-112 mg/g and a primary particle size of less than or equal to 20 nm. The carbon blacks can have a primary particle size of less than or equal to 19 nm.

The present invention further provides new carbon blacks having an $I_2$ No. of 65-112 mg/g; a primary particle size of less than or equal to 20 nm; and a CDBP of less than or equal to 102 cc/100 g. The carbon blacks can have an $I_2$ No. of 73-104 mg/g; a primary particle size of less than or equal to 19 nm; and/or a CDBP of 70-100 cc/100 g. The carbon blacks can have an $I_2$ No. of 75-99 mg/g; a primary particle size of less than or equal to 19 nm; and/or a CDBP of 80-95 cc/100 g.

In addition, the present invention provides carbon blacks having an $I_2$ No. of 50-70 mg/g and a primary particle size of less than or equal to 25 nm. The carbon blacks can have an $I_2$ No. of 55-65 mg/g and/or a primary particle size of from greater than 20 nm to 25 nm.

Further, the present invention provides new carbon blacks having an $I_2$ No. of 50-85 mg/g; a primary particle size of less than or equal to 25 nm; and a CDBP of less than or equal to 96 cc/100 g. The carbon blacks can have an $I_2$ No. of 55-80 mg/g; a primary particle size of from greater than 20 nm to 25 nm; and/or a CDBP of 50-96 cc/100 g. The carbon blacks can have an $I_2$ No. of 60-78 mg/g; a primary particle size of from greater than 20 nm to 25 nm; and/or a CDBP of 50-96 cc/100 g.

The carbon blacks of the present invention described above or throughout preferably have one or more of the following properties: An ash content of less than 1%, more preferably less than 0.1% as measured by ASTM D-1506. A total sulfur content of less than 2% and more preferably less than 0.1% as measured by a ASTM D-1619. A toluene extractable level or content of less than 1% and more preferably less than 0.1% as measured by ASTM D-1618 in wt%. A 325 mesh residue of 200 ppm or less and more preferably less than 20 ppm as measured by ASTMD-1514. Preferably, at least two or at least three, or all of the properties are present.

The carbon blacks of the present invention may be produced by any process but are preferably produced in the manner described below. It should be understood however, that although the process for producing the carbon blacks of the present invention is described below with reference to one type of carbon black furnace reactor, the process may be practiced in any carbon black reactor.

The carbon blacks of the present invention may be produced by any process known in the art. Preferably the carbon blacks of the present invention are produced in a furnace carbon black reactor having a first (combustion) zone, a transition zone, and a reaction zone wherein:

a carbon black-yielding feedstock is injected into a hot combustion gas stream; the resultant mixture of hot combustion gases and feedstock passes into the reaction zone; and pyrolysis of the carbon black-yielding feedstock is stopped by quenching the mixture when the carbon blacks of the present invention have been formed and wherein there is utilized a primary combustion level of greater than 300%, preferably at least 550%, more preferably 500-1200%. Preferably the overall combustion level of the process for producing the carbon blacks of the present invention is at least 22%, preferably 22% to 31%, more preferably 25% to 28%. It is also preferred that the residence time for the carbon black forming reactions in the process for producing the carbon blacks of the present invention is 0.55 second to 9.9 seconds, more preferably 1.06 seconds to 6.58 seconds. The process for preparing the novel carbon blacks of the present invention will be described in greater detail hereinafter.

In particular, the carbon blacks of the present invention may be produced according to the process of the present invention in a modular, also referred to as "staged," furnace carbon black reactor. A section of a typical modular furnace carbon black reactor which may be utilized to produce the carbon blacks of the present invention is depicted in FIG. 1. Other details of a typical modular furnace carbon black reactor may be found, for example, in the description contained in U.S. Pat. No. 3,922,335, the disclosure of which is herein incorporated by reference.

Referring to FIG. 1, the carbon blacks of the present invention may be produced in a furnace carbon black reactor 2, having a combustion zone 10, which has a zone of converging diameter, 11, a transition zone 12, and reaction zone 18. The end of the reaction zone 18 nearest the transition zone 12 has a zone, 17, of a restricted diameter. The diameter of the combustion zone 10, up to the point where the zone of converging diameter 11, begins is shown as D-1; the diameter of zone 12, as D-2; the diameter of zone 17, as D-3; and the diameter of zone 18, as D-4. The length of the combustion zone 10, up to the point where the zone of converging diameter 11, begins is shown as L-1; the length of the zone of converging diameter, 11, is shown as L-2; the length of the transition zone, 12, is shown as L-3; and the length of the zone, 17, of restricted diameter, is shown as L-4.

To produce the carbon blacks of the present invention, hot combustion gases are generated in combustion zone 10, by reacting a liquid or gaseous fuel with a suitable oxidant such as air, oxygen, mixtures of air and oxygen or the like. Among the fuels suitable for use in reacting with the oxidant stream in combustion zone 10, to generate the hot combustion gases are included any of the readily combustible gas, vapor or liquid streams such as natural gas, hydrogen, carbon monoxide, methane, acetylene, alcohols, or kerosene. It is generally preferred, however, to utilize fuels having a high content of carbon-containing components and, in particular, hydrocarbons. The ratio of air to natural gas utilized to produce the carbon blacks of the present invention is at least 30:1, preferably 45:1 to 100:1. To facilitate the generation of hot combustion gases, the oxidant stream may be preheated.

In order to produce the carbon blacks of the present invention, the primary combustion level of the carbon black production process is preferably greater than 300% and preferably at least 550%. More preferably, to produce the carbon blacks of the present invention, the primary combustion level of the carbon black production process is 500-1200%.

As referred to herein, the primary combustion level represents the amount of oxidant such as air used in the first stage of a multi-staged process relative to the theoretical amount of oxidant required for the complete combustion of the first stage hydrocarbon to carbon dioxide and water. For purposes of convenience, the primary combustion level is expressed in terms of a percentage.

The theoretical amount of oxidant required for the complete combustion of the first stage hydrocarbon to carbon dioxide and water is referred to herein as the "Air-to-burn-Gas Ratio", and expressed as a ratio of volumes of theoretical oxidant and first stage hydrocarbon. The quantities of oxidant and first stage hydrocarbon may be described in any convenient and consistent set of units.

The primary combustion level may be determined according to the following formula:

$$\frac{(\text{Measured Air Rate}) \times 100}{(\text{Measured Gas Rate}) \times (\text{Air-to-burn-Gas Ratio}}$$

where:

"Measured Air Rate"=the volumetric flow rate of air introduced into the combustion zone of the reactor measured at standard conditions of temperature and pressure "Measured Gas Rate"=the volumetric flow rate of gas introduced into the combustion zone of the reactor measured at standard conditions of temperature and pressure and the "Measured Air Rate", the "Measured Gas Rate" and the "Air-to-burn-Gas Ratio" are in a set of mutually consistent units.

As used herein, "standard conditions of temperature and pressure" refer to a temperature of 60° F. and a pressure of 1 atmosphere (atm).

The hot combustion gas stream flows downstream from zones 10 and 11 into zones 12, 17 and then 18. The direction of the flow of hot combustion gases is shown in FIG. 1 by the arrow. Carbon black-yielding feedstock 30 is introduced at point 32 located in zone 12. The feedstock may be introduced either through a probe 15, or preferably radially inward through a plurality of openings positioned in the wall of zone 12 at point 32, or a combination of the two. Suitable for use herein as carbon black-yielding hydrocarbon feedstocks, which are readily volatilizable under the conditions of the reaction, are unsaturated hydrocarbons such as acetylene; olefins such as ethylene, propylene, butylene; aromatics such as benzene, toluene and xylene; certain saturated hydrocarbons; and volatilized hydrocarbons such as kerosenes, naphthalenes, terpenes, ethylene tars, aromatic cycle stocks and the like.

The distance from point 32 downstream to the beginning of the zone, 17, of restricted diameter in the reaction zone is shown as F-1. In each of the examples described herein, carbon black-yielding feedstock 30, was injected radially inward through a plurality of openings positioned in the wall of zone 12 at point 32, the resulting jets penetrating into the interior regions of the hot combustion gas stream so as to rapidly decompose and convert the feedstock to the novel carbon blacks of the present invention.

In order to produce the carbon blacks of the present invention, the overall combustion level of the carbon black production process is preferably at least 22%, more preferably 22 to 35%, and even more preferably 25 to 28%.

As referred to herein, and known to those skilled in the art, the overall combustion level represents the total amount of oxidant such as air used in the carbon forming process relative to the amount of oxidant required for the complete combustion of the total amount of hydrocarbon used in the carbon forming process to form carbon dioxide and water. The overall combustion level is usually expressed as a percentage.

For purposes of convenience, the amount of oxidant required for the complete combustion of the carbon black-yielding feedstock to carbon dioxide and water is referred to as the Air-to-bum-Oil Ratio, and expressed as a ratio of volumes of theoretical oxidant and carbon black-yielding feedstock. The quantities of oxidant and carbon black yielding feedstock may be described in any convenient and consistent set of units.

The overall combustion level may be determined according to the following formula:

$$\frac{(\text{Measured Air Rate}) \times 100}{(\text{Measured Gas Rate}) \times (\text{Air-to-burn-Gas Ratio}) + (\text{Measured Oil Rate}) \times (\text{Air-to-burn Ratio})}$$

where:

"Measured Air Rate"=the volumetric flow rate of air introduced into the combustion zone of the reactor measured at standard conditions of temperature and pressure "Measured Gas Rate"=the volumetric flow rate of gas introduced into the combustion zone of the reactor measured at standard conditions of temperature and pressure.

"Measured Oil Rate"=the volumetric flow rate of oil introduced into the reactor measured at standard conditions of temperature and pressure,
and the "Measured Air Rate", the "Measured Gas Rate", the "Measured Oil Rate", the "Air-to-burn-Gas Ratio" and the "Air-to-burn-Oil Ratio" are in a set of mutually consistent units.

The mixture of carbon black-yielding feedstock and hot combustion gases flows downstream through zones 12 and 17 into zone 18. Quench 40, located at point 42, injecting quenching fluid 50, which in the examples described herein was water, is utilized to stop pyrolysis of the carbon black-yielding feedstock when the novel carbon blacks of the present invention are formed. Point 42 may be determined in any manner known to the art for selecting the position of a quench to stop pyrolysis.

One method for determining the position of the quench utilized to stop pyrolysis is by determining the point at which an acceptable toluene extract level for the novel carbon blacks of the present invention is achieved. Toluene extract level may be measured by using ASTM Test Procedure D1618-83, "Carbon black extractables--Toluene Discoloration."

In a preferred embodiment of the process for producing the carbon blacks of the present invention, the location of the quench is determined in such manner as to ensure that the resultant nominal residence time for the carbon black forming reactions in the reactor is 0.55 second to 9.9 seconds and preferably 1.06 to 6.58 seconds. The nominal residence time in the reactor is defined herein as the time nominally required for the oxidant traveling through the reactor to travel from the point of injection of carbon black-yielding feedstock to the point of quench, if the oxidant were unaltered by any of the processes occurring in any of the stages of the staged reactor, and where the volumetric flow rate of the oxidant is defined at standard conditions of temperature and pressure.

After the mixture of hot combustion gases and carbon black-yielding feedstock is quenched, the cooled gases pass downstream into any conventional cooling and separating means whereby the carbon blacks are recovered. The separation of the carbon black from the gas stream is readily accomplished by conventional means such as a precipitator, cyclone separator or bag filter. This separation may be followed by pelletizing using, for example, a wet pelletizer.

In the reactor illustrated in FIG. 2, the reaction zone further comprises zones 18A, 18B and 18C. Zone 18A is located adjacent to zone 17B. Zone 18B is located adjacent to zone 18A and is angled at an angle OMEGA. as shown in FIG. 2. Zone 18C is located adjacent to zone 18B. The diameter of zone 18A is shown as D-4A; the diameter of zone 18B, as D-4B, and the diameter of zone 18C, as D-4C. The length of the zone, 18A is shown as L-5A; the length of each of the sections of zone 18B, in a direction parallel to the horizontal, are either L-5B or L-5C as shown in FIG. 2.

The processes and carbon black products described in U.S. Patent Nos. 5,877,250 and 5,877,251 can be used herein and form a part of the present invention and are incorporated in their entirety by reference herein.

The carbon blacks of the present invention preferably have the ash content, total sulfur content, and the toluene extractable level, as described above. These properties can be achieved by properly controlling the type of feedstock used and the amount of water used in the process as well as the reactor temperature, residence time, and the quench length or temperature in the drier during the formation of the carbon black.

The polymer compositions of the present invention comprise a polymer and at least one type of carbon black of the present invention. The polymer compositions of the present invention include a polymer, natural rubbers, synthetic rubbers, elastomers, and blends or mixtures thereof. The amount of carbon black utilized in the polymer compositions of the present invention includes any amount effective to achieve the results desired for the intended end use of the polymer composition, such amounts being conventional and well known to those of ordinary skill in the art. Generally, amounts of the carbon black product ranging from 0.5 to 300 parts by weight can be used for each 100 parts by weight of polymer. It is, however, preferred to use amounts varying from 0.5 to 100 parts by weight of carbon black per 100 parts by weight of polymer and especially preferred is the utilization of from 0.5 to 80 parts by weight of carbon black per 100 parts by weight of polymer.

Among the polymers suitable for use with the present invention are natural rubber, synthetic rubber and their derivatives such as chlorinated rubber; copolymers of from about 10 to about 70 percent by weight of styrene and from about 90 to about 30 percent by weight of butadiene such as copolymer of 19 parts styrene and 81 parts butadiene, a copolymer of 30 parts styrene and 70 parts butadiene, a copolymer of 43 parts styrene and 57 parts butadiene and a copolymer of 50 parts styrene and 50 parts butadiene; polymers and copolymers of conjugated dienes such as polybutadiene, polyisoprene, polychloroprene, and the like, and copolymers of such conjugated dienes with an ethylenic group-containing monomer copolymerizable therewith such as styrene, methyl styrene, chlorostyrene, acrylonitrile, 2-vinyl-pyridine, 5-methyl-2-vinylpyridine, 5-ethyl-2-vinylpyridine, 2-methyl-5-vinylpyridine, alkyl-substituted acrylates, vinyl ketone, methyl isopropenyl ketone, methyl vinyl ether, alphamethylene carboxylic acids and the esters and amides thereof such as acrylic acid and dialkylacrylic acid amide; also suitable for use herein are copolymers of ethylene and other high alpha olefins such as propylene, butene-1 and pentene-1; particularly preferred are the ethylene-propylene copolymers wherein the ethylene content ranges from 20 to 90 percent by weight and also the ethylene-propylene polymers which additionally contain a third monomer such as dicyclopentadiene, 1,4-hexadiene and methylene norbornene.

Additionally preferred polymeric compositions are polyolefins such as polypropylene and polyethylene. Suitable polymers also include:

a) propylene homopolymers, ethylene homopolymers, and ethylene copolymers and graft polymers where the co-monomers are selected from butene, hexene, propene, octene, vinyl acetate, acrylic acid, methacrylic acid, $C_{1-8}$ alkyl esters of acrylic acid, $C_{1-8}$ alkyl esters of methacrylic acid, maleic anhydride, half ester of maleic anhydride, and carbon monoxide;

b) elastomers selected from natural rubber, polybutadiene, polyisoprene, random or block styrene butadiene rubber (SBR), polychloroprene, acrylonitrile butadiene, ethylene propylene co and terpolymers, ethylene propylene diene monomer (EPDM);

c) homopolymers and copolymers of styrene, including styrene-butadiene styrene linear and radial polymer, acrylonitrile butadiene styrene (ABS) and styrene acrylonitrile (SAN);

d) thermoplastics, including polyethylene terephthalate (PET), polybutylene terephthalate (PBT), polycarbonates, polyamides, polyvinyl chlorides (PVC), acetals; and

e) thermosets, including polyurethane, epoxies and polyesters.

Additionally preferred polymeric compositions are polyolefins such as polypropylene and polyethylene, polystyrene, polycarbonate, nylon, or copolymers thereof. Examples include, but are not limited to, LLDPE, HDPE, MDPE, and the like.

The polymer compositions of the present invention can form any part of an article. The polymer compositions of the present invention containing the carbon blacks of the present invention have particular useful applications with regard to UV application such as pipe, film, membranes, jacketing, components thereof, and fittings thereof, and the like. The pipes and the like can be any suitable size or thickness. Thus, articles that can be formed at least in part from the polymer compositions of the present invention include, but are not limited to, pipe, cable jacketing, membranes, molding, and the like. Particularly preferred examples of articles that can be formed, at least in part from the polymer compositions of the present invention, are pressure pipes, for such uses as potable water, gas, and other liquids and gases, and the like. The designs, components, and uses described, for instance, in U.S. Patent Nos. 6,024,135 and 6,273,142 can be used herein and are incorporated in their entirety by reference herein.

An advantage of the carbon blacks of the present invention is that the carbon blacks preferably impart low viscosity to the polymer compositions into which they are incorporated.

Another advantage of the carbon blacks of the present invention is that the carbon blacks impart low CMA (compound moisture absorption) to the polymer compositions into which they are incorporated.

A further advantage of the carbon blacks of the present invention is that the carbon blacks may be incorporated at high carbon black loadings into polymer compositions.

Although any amount of carbon black effective to achieve an intended end use may be utilized in the polymer compositions of the present invention, generally, amounts of the carbon black ranging from about 0.5 to about 300 parts by weight can be used for each 100 parts by weight of polymer. It is, however, preferred to use amounts varying from about 0.5 to about 100 parts by weight of carbon black per 100 parts by weight of polymer and especially preferred is the utilization of from about 0.5 to about 80 parts by weight of carbon black per 100 parts by weight of polymer.

The polymer compositions may include other conventional additives such as curing agents, processing additives, hydrocarbon oils, accelerators, coagents, antioxidants and the like.

The polymer compositions of the present invention may be produced by any manner known in the art for combining polymers and particulate components.

The following testing procedures were used in the determination and evaluation of the analytical properties of the carbon blacks of the present invention, and the of the polymer compositions incorporating the carbon blacks of the present invention.

The CTAB (cetyl trimethyl ammonium bromide adsorption area) of the carbon blacks was determined according to ASTM Test Procedure D3750-85.

The $I_2$ No. was determined according to ASTM Test Procedure D1510. The Tint value ("Tint") of the carbon blacks was determined according to the procedure set forth in ASTM D3250.

The DBP (dibutyl phthalate absorption value) of the carbon black pellets was determined according to ASTM Test Procedure D2414.

The CDBP (crushed dibutyl phthalate absorption value) of the carbon black pellets was determined according to the procedure set forth in ASTM D3493-86.

The toluene extract level of the carbon blacks was determined utilizing a Milton Roy Spectronic 20 Spectrophotometer, manufactured by Milton Roy, Rochester, N.Y. according to ASTM Test Procedure D1618.

The particle size of the carbon blacks was determined according to the procedure set forth in ASTM D3849-89.

Other embodiments of the present invention will be apparent to those skilled in the art from consideration of the present specification and practice of the present invention disclosed herein. It is intended that the present specification and examples be considered as exemplary only with a true scope and spirit of the invention being indicated by the following claims and equivalents thereof.

**Claims**

1. An article comprising a polymer composition, wherein the polymer composition comprises at least one polymer and a carbon black having an $I_2$ No. of from about 50 to about 112 mg/g, primary particle size of not greater than 25 nm, and the following properties:

   a) an ash content of less than about 1%;
   b) a total sulfur content of less than about 2%; and
   c) a 325 mesh residue of about 200 ppm or less,
   wherein the article is a pipe.

2. The article of claim 1 wherein the $I_2$ No. is 73-104 mg/g.

3. The article of claim 2 wherein the $I_2$ No. is 75-99 mg/g.

4. The article of claim 1 wherein the polymer composition comprises 0.5 to 300 parts by weight carbon black per 100 parts by weight of polymer.

5. The article of claim 1 wherein the polymer composition comprises 0.5 to 100 parts by weight carbon black per 100 parts by weight of polymer.

6. The article of claim 1 wherein the polymer composition comprises 0.5 to 80 parts by weight carbon black per 100 parts by weight of polymer.

7. The article of claim 1 wherein the polymer is a polyethylene or copolymers thereof.

8. The article of claim 1 wherein the $I_2$ No. is approximately 104 mg/g and the primary particle size is approximately 16 nm.

9. The article of claim 1 wherein the $I_2$ No. is approximately 89 mg/g and the primary particle size is approximately 18 nm.

10. The article of claim 1 wherein the $I_2$ No. is approximately 91 mg/g and the primary particle size is approximately 18 nm.

11. The article of claim 1 wherein the $I_2$ No. is approximately 99 mg/g and the primary particle size is approximately 17 nm.

12. The article of claim 1 wherein the $I_2$ No. is approximately 86 mg/g and the primary particle size is approximately 19 nm.

13. The article claim 1 wherein the $I_2$ No. is approximately 96 mg/g and the primary particle size is approximately 17 nm.

14. The article of claim 1 wherein the $I_2$ No. is approximately 85 mg/g and the primary particle size is approximately 17 nm.

15. The article of claim 1 wherein the $I_2$ No. is approximately 73 mg/g and the primary particle size is approximately 18 nm.

16. The article of claim 1 wherein the $I_2$ No. is approximately 86 mg/g and the primary particle size is approximately 19.5 nm.

17. The article of claim 1 wherein the $I_2$ No. is approximately 90 mg/g and the primary particle size is approximately 19 nm.

18. The article of claim 1 wherein the $I_2$ No. is approximately 89 mg/g and the primary particle size is approximately 17 nm.

19. The article of claim 1, wherein said total sulfur content is less than about 0.1%.

20. The article of claim 4, wherein said polymer is a polyolefin.

21. The article of claim 4, wherein said polymer comprises LLDPE, HDPE, MDPE, or combinations thereof.

22. The article of claim 4, wherein said polymer comprises a polystyrene, polycarbonate, nylon, or combinations thereof or copolymers thereof.

23. The article of claim 1, wherein said article is a pressure pipe.

24. The article of claim 23, wherein said pressure pipe is a UV pressure pipe.

25. The article of claim 1, wherein said article is a potable water or gas pipe.

26. The article of claim 1, further comprising a CDBP of less than or equal to 102 cc/100 g.

27. The article of claim 26 wherein the CDBP is 70-100 cc/100 g.

28. The article of claim 26 wherein the CDBP is 80-95 cc/100 g.

29. The article of claim 1, having an $I_2$ No. of 50-85 mg/g; a primary particle size of less than or equal to 25 mn; and a CDBP of less than or equal to 96 cc/100 g.

30. The article of claim 29 wherein the $I_2$ No, is 55-80 mg/g.

31. The article of claim 38 wherein the primary particle size is from greater than 20 nm to 25 nm.

32. The article of claim 31 wherein the CDBP is 50-96 cc/100 g.

33. The article of claim 32 wherein the $I_2$ No. is 60-78 mg/g.

**Patentansprüche**

1. Artikel, umfassend eine Polymerzusammensetzung, wobei die Polymerzusammensetzung mindestens ein Polymer und einen Ruß umfasst, der eine $I_2$-Nr. von etwa 50 bis etwa 112 mg/g aufweist, eine Primärpartikelgröße von nicht größer als 25 nm und die folgenden Eigenschaften aufweist:

> a) einen Aschegehalt von weniger als etwa 1%;
> b) einen Gesamtschwefelgehalt von weniger als etwa 2%; und
> c) einen 325 Mesh Rückstand von etwa 200 ppm oder weniger,

wobei der Artikel ein Rohr ist.

2. Artikel nach Anspruch 1, wobei die $I_2$-Nr. 73-104 mg/g beträgt.

3. Artikel nach Anspruch 2, wobei die $I_2$-Nr. 75-99 mg/g beträgt.

4. Artikel nach Anspruch 1, wobei die Polymerzusammensetzung 0,5 bis 300 Gewichtsteile Ruß pro 100 Gewichtsteile Polymer umfasst.

5. Artikel nach Anspruch 1, wobei die Polymerzusammensetzung 0,5 bis 100 Gewichtsteile Ruß pro 100 Gewichtsteile Polymer umfasst.

6. Artikel nach Anspruch 1, wobei die Polymerzusammensetzung 0,5 bis 80 Gewichtsteile Ruß pro 100 Gewichtsteile Polymer umfasst.

7. Artikel nach Anspruch 1, wobei das Polymer ein Polyethylen oder Copolymere davon ist.

8. Artikel nach Anspruch 1, wobei die $I_2$-Nr. etwa 104 mg/g und die Primärpartikelgröße etwa 16 nm beträgt.

9. Artikel nach Anspruch 1, wobei die $I_2$-Nr. etwa 89 mg/g und die Primärpartikelgröße etwa 18 nm beträgt.

10. Artikel nach Anspruch 1, wobei die $I_2$-Nr. etwa 91 mg/g und die Primärpartikelgröße etwa 18 nm beträgt.

11. Artikel nach Anspruch 1, wobei die $I_2$-Nr. etwa 99 mg/g und die Primärpartikelgröße etwa 17 nm beträgt.

12. Artikel nach Anspruch 1, wobei die $I_2$-Nr. etwa 86 mg/g und die Primärpartikelgröße etwa 19 nm beträgt.

13. Artikel nach Anspruch 1, wobei die $I_2$-Nr. etwa 96 mg/g und die Primärpartikelgröße etwa 17 nm beträgt.

14. Artikel nach Anspruch 1, wobei die $I_2$-Nr. etwa 85 mglg und die Primärpartikelgröße etwa 17 nm beträgt.

15. Artikel nach Anspruch 1, wobei die $I_2$-Nr. etwa 73 mg/g und die Primärpartikelgröße etwa 18 nm beträgt.

16. Artikel nach Anspruch 1, wobei die $I_2$-Nr. etwa 86 mg/g und die Primärpartikelgröße etwa 19,5 nm beträgt.

17. Artikel nach Anspruch 1, wobei die $I_2$-Nr. etwa 90 mg/g und die Primärpartikelgröße etwa 19 nm beträgt.

18. Artikel nach Anspruch 1, wobei die $I_2$-Nr. etwa 89 mg/g und die Primärpartikelgröße etwa 17 nm beträgt.

19. Artikel nach Anspruch 1, wobei der Gesamtschwefelgehalt weniger als etwa 0,1% beträgt.

20. Artikel nach Anspruch 4, wobei das Polymer ein Polyolefin ist.

21. Artikel nach Anspruch 4, wobei das Polymer LLDPE, HDPE, MGPE oder Kombinationen davon umfasst.

22. Artikel nach Anspruch 4, wobei das Polymer ein Polystyrol, Polycarbonat, Nylon, oder Kombinationen davon oder Copolymere davon umfasst.

23. Artikel nach Anspruch 1, wobei der Artikel ein Druckrohr ist.

24. Artikel nach Anspruch 23, wobei das Druckrohr ein UV-Druckrohr ist.

**25.** Artikel nach Anspruch 1, wobei der Artikel ein Trinkwasser- oder Gasrohr ist.

**26.** Artikel nach Anspruch 1, darüber hinaus umfassend einen CDBP von weniger als oder gleich 102 $cm^3$/100 g.

**27.** Artikel nach Anspruch 26, wobei der CDBP 70 bis 100 $cm^3$/100 g beträgt.

**28.** Artikel nach Anspruch 26, wobei der CDBP 80 bis 95 $cm^3$/100 g beträgt.

**29.** Artikel nach Anspruch 1, der eine $I_2$-Nr. von 50 bis 85 mg/g aufweist, eine Primärpartikelgröße von weniger als oder gleich 25 nm und einen CDBP von weniger als oder gleich 96 $cm^3$/100 g aufweist.

**30.** Artikel nach Anspruch 29, wobei die $I_2$-Nr. 55 bis 80 mg/g beträgt.

**31.** Artikel nach Anspruch 1, wobei die Primärpartikelgröße größer als 20 nm bis 25 nm ist.

**32.** Artikel nach Anspruch 31, wobei der CDBP 50 bis 96 $cm^3$/100 g beträgt.

**33.** Artikel nach Anspruch 32, wobei die $I_2$-Nr. 60 bis 78 mg/g beträgt.

## Revendications

**1.** Article comprenant une composition de polymère, où la composition de polymère comprend au moins un polymère et un noir de carbone ayant un numéro $I_2$ d'environ 50 à environ 112 mg/g, une taille de particule primaire non supérieure à 25 nm, et les propriétés suivantes:

a) une teneur en cendre inférieure à environ 1%;
b) une teneur totale en soufre inférieure à environ 2%; et
c) un résidu de maille 325 d'environ 200 ppm ou moins,
où l'article est un tube.

**2.** Article selon la revendication 1, où le numéro $I_2$ est 73-104 mg/g.

**3.** Article selon la revendication 2, où le numéro $I_2$ est 75-99 mg/g.

**4.** Article selon la revendication 1, où la composition de polymère comprend 0,5 à 300 parts en poids de noir de carbone pour 100 parts en poids de polymère.

**5.** Article selon la revendication 1, où la composition de polymère comprend 0,5 à 100 parts en poids de noir de carbone pour 100 parts en poids de polymère.

**6.** Article selon la revendication 1, où la composition de polymère comprend 0,5 à 80 parts en poids de noir de carbone pour 100 parts en poids de polymère.

**7.** Article selon la revendication 1, où le polymère est un polyéthylène ou des copolymères de celui-ci.

**8.** Article selon la revendication 1, où le No. $I_2$ est approximativement 104 mg/g et la taille de particule primaire est approximativement de 16 nm.

**9.** Article selon la revendication 1, où le No. $I_2$ est approximativement 89 mg/g et la taille de particule primaire est approximativement de 18 nm.

**10.** Article selon la revendication 1, où le No. $I_2$ est approximativement 91 mg/g et la taille de particule primaire est approximativement de 18 nm.

**11.** Article selon la revendication 1, où le No. $I_2$ est approximativement de 99 mg/g et la taille de particule primaire est approximativement de 17 nm.

**12.** Article selon la revendication 1, où le No. $I_2$ est approximativement de 86 mg/g, et la taille de particule primaire est approximativement de 19 nm.

**13.** Article selon la revendication 1, où le No. $I_2$ est approximativement de 96 mg/g, et la taille de particule primaire est approximativement de 17 nm.

**14.** Article selon la revendication 1, où le No. $I_2$ est approximativement de 85 mg/g, et la taille de particule primaire est approximativement de 17 nm.

**15.** Article selon la revendication 1, où le No. $I_2$ est approximativement de 73 mg/g, et la taille de particule primaire est approximativement de 18 nm.

**16.** Article selon la revendication 1, où le No. $I_2$ est approximativement de 86 mg/g, et la taille de particule primaire est approximativement de 19,5 nm.

**17.** Article selon la revendication 1, où le No. $I_2$ est approximativement de 90 mg/g, et la taille de particule primaire est approximativement de 19 nm.

**18.** Article selon la revendication 1, où le No. $I_2$ est approximativement de 89 mg/g, et la taille de particule primaire est approximativement de 17 nm.

**19.** Article selon la revendication 1, où la teneur totale en soufre est inférieure à environ 0,1%.

**20.** Article selon la revendication 4, où ledit polymère est une polyoléfine.

**21.** Article selon la revendication 4, où ledit polymère comprend LLDPE, HDPE, MDPE, ou leurs combinaisons.

**22.** Article selon la revendication 4, où ledit polymère comprend un polystyrène, polycarbonate, nylon ou leurs combinaisons ou des copolymères de ceux-ci.

**23.** Article selon la revendication 1, où ledit article est un tube sous pression.

**24.** Article selon la revendication 23, où ledit tube sous pression est un tube sous pression UV.

**25.** Article selon la revendication 1, où ledit article est un tube d'eau potable ou de gaz.

**26.** Article selon la revendication 1, comprenant en outre une CDBP inférieure ou égale à 102 cc/100 g.

**27.** Article selon la revendication 26, où la CDBP est 70-100 cc/100 g.

**28.** Article selon la revendication 26, où la CDBP est 80-95 cc/100 g.

**29.** Article selon la revendication 1, ayant un No. $I_2$ de 50-85 mg/g; une taille de particule primaire inférieure ou égale à 25 nm; et une CDBP inférieure ou égale à 96 cc/100 g.

**30.** Article selon la revendication 29, où le No. $I_2$ est 55-80 mg/g.

**31.** Article selon la revendication 1, où la taille de particule primaire est supérieure à 20 nm jusqu'à 25 nm.

**32.** Article selon la revendication 31, où la CDBP est 50-96 cc/100 g.

**33.** Article selon la revendication 32, où le No. $I_2$ est 60-78 mg/g.

FIG. I

FIG. 2

**EP 1 525 254 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3922335 A
- US 5877250 A
- US 5877251 A
- US 6024135 A
- US 6273142 A